# EUROPÄISCHE PATENTANMELDUNG

(11) **EP 1 215 806 A1**
(43) Veröffentlichungstag der Anmeldung: **19.06.2002**
(21) Anmeldenummer: 01000723.5
(22) Anmeldetag: 06.12.2001
(51) Int. Cl.: H02M 1/00, H02M 7/06

(54) **Schaltungsanordnung**

(30) Priorität: 16.12.2000 DE 10062980
(71) Anmelder: Philips Corporate Intellectual Property GmbH, 52066 Aachen (DE); Koninklijke Philips Electronics N.V., 5621 BA Eindhoven (NL)
(72) Erfinder: Dürbaum, Thomas, Dr., 52066, Aachen (DE)
(74) Vertreter: Volmer, Georg, Dipl.-Ing.

(57) **Zusammenfassung**

Beschrieben wird eine Schaltungsanordnung zur Umwandlung einer Eingangs-Wechselspannung in eine gleichgerichtete Ausgangsspannung mit einer Gleichrichterschaltung (G) und einem nachgsschalteten Ladekondensator (C_{HV}).

Die Schaltungsanordnung weist zusätzlich einen Stabilisierungskondensator (C₁, C₂) auf, welcher derart parallel zum Ladekondensator (C_{HV}) geschaltet ist, dass der Stabilisierungskondensator (C₁, C₂) bei einem Aufladen des Ladekondensators (C_{HV}) maximal soweit aufgeladen wird, bis der am Stabilisierungskondensator (C₁, C₂) anliegende Spannungswert einem Bruchteil einer am Ladekondensator (C_{HV}) maximal anliegenden Spitzenspannung entspricht. Dieser Stabilisierungskondensator wird im wesentlichen erst bei einem Abfall der am Ladekondensator (C_{HV}) anliegenden Spannung unter den am Stabilisierungskondensator (C₁, C₂) anliegenden Spannungswert wieder entladen.

## Beschreibung

Die Erfindung betrifft eine Schaltungsanordnung zur Umwandlung einer Eingangs-Wechselspannung in eine gleichgerichtete Ausgangsspannung mit einer Gleichrichterschaltung und einem nachgeschalteten Ladekondensator.

Derartige Schaltungsanordnungen werden unter anderem in Netzteilen zur Stromversorgung beliebiger Geräte, beispielsweise Fernseher, Monitore, Settop-Boxen oder dergleichen verwendet. Eingangsspannung ist häufig die Netzspannung, beispielsweise eine 220 V Wechselspannung Diese Eingangs-Wechselspannung wird in der Gleichrichter-Schaltung, welche üblicherweise durch geeignet angeordnete Dioden aufgebaut ist, in eine gleichgerichtete Spannung umgewandelt, die zwischen einem Spitzenwert und dem Nullpotential periodisch schwankt. Die Ausgangsspannung der Gleichrichterschaltung weist daher eine hohe Welligkeit auf. Um die Welligkeit herabzusetzen, wird parallel zum Ausgang der Schaltungsanordnung ein Ladekondensator gsschaltet, an dem die gleichgerichtete Ausgangsspannung abgegriffen wird. Ein solcher Ladekondensator wird beim Ansteigen der gleichgerichteten Spannung am Ausgang der Gleichrichtemchaltung aufgeladen und entlädt sich wieder, wenn die Spannung absinkt. Das heißt, der Ladekondensator dient als Puffer, der dann, wenn die Spannung am Ausgang der Gleichrichterschaltung absinkt, aufgrund der gespeicherten Ladungsmenge die Spannung noch eine gewisse Zeit aufrechterhält, bis die Spannung am Ausgang der Gleichrichtexschaltung wieder ansteigt. Die an dieser Schaltungsanordnung abgegriffene gleichgerichtete Ausgangsspannung ist folglich bereits mehr oder weniger gut geglättet und sinkt in der Regel nicht unter einen minimalen Spannungswert ab. Üblicherweise wird eine derartige Schaltungsanordnung als sogenannter "Zwischenkreis" verwendet. Das bedeutet, der Schaltungsanordnung wird noch ein DC-DC-Konverter (Gleichstrom-Gleichstrom-Wandler) nachgeschaltet, der die gleichgerichtete Ausgangsspannung des Zwischenkreises noch weiter glättet und in die für das jeweilige Gerät benötigten Betriebsspannungen umwandelt.

Bei einer Spannungsversorgung über das öffentliche Stromnetz ist unter anderem damit zu rechnen, dass es kurzzeitig zu Stromausfällen kommen kann, die sich über mehrere Netzhalbwellen hinziehen können. So bedeutet beispielsweise ein Netzausfall von 20 ms in einem 50 Hz-Netz ein Wegfallen von 2 Halbwellen. Hierbei sinkt zwangsläufig die Zwischenkreisspannung stark ab. Damit derartige kurzzeitige Netzausfälle nicht zu einer Betriebsunterbrechung der Geräte führt, wird von den Spezifikationen in aller Regel gefordert, dass die Geräte in der Lage sein müssen, den kompletten Ausfall mehrerer Netzhalbwellen zu verkraften. Dies erfordert jedoch, dass die Spannung im Zwischenkreis nicht bis auf Null abfallen darf. Der nachfolgende DC-DC-Konverter muss außerdem noch mit der niedrigsten auftretenden Spannung im Zwischenkreis arbeiten können. Dabei vemchlechtert sich das Design dieses Konverters, je tiefer die minimal erlaubte Spannung im Zwischenkreis bei einem Netzausfall ist. Nach dem derzeitigen allgemein bekannten Stand der Technik wird der Netzausfall durch eine entsprechend große Dimensionierung des Ladekondensators, üblicherweise ein Elektrolytkondensator, überbrückt. Da es sich bei diesem Ladekondensator um ein Bauteil handelt, welches durch das ständige Auf- und Entladen starken Belastungen, insbesondere thermischen Belastungen, ausgesetzt ist, und zudem eine hohe Spannungsfestigkeit (beim europäischen Netz üblicherweise 400 V) erforderlich ist, sind entsprechend große Kapazitäten außerordentlich teuer.

Es ist Aufgabe der vorliegenden Erfindung, eine kostengünstigere Alternative zu diesem bekannten Stand der Technik zu schaffen, mit der möglichst sicher der komplette Ausfall mehrerer Netzhalbwellen überbrückt werden kann.

Diese Aufgabe wird durch eine Schaltungsanordnung gemäß Anspruch 1 gelöst.

Durch die Verwendung eines parallel zum Ladekondensator geschalteten Stabilisierungskondensators, welcher als Reservepuffer dient, kann der Ladekondensator selbst für den Normalbetrieb, d.h. ohne Berücksichtigung eines Netzausfalls, ausgelegt werden. Er kann daher wesentlich kleiner und damit kostengünstiger ausfallen. Da erfindungsgemäß dafür gesorgt ist, dass der am Stabilisierungskondensator anliegende Spannungswert nur einem Bruchteil einer am Ladekondensator maximal anliegenden Spitzenspannung entspricht und dementsprechend im wesentlichen erst bei einem Abfall der am Ladekondensator anliegenden Spannung unter den am Stabilisierungskondensator anliegenden Spannungswert wieder entladen wird, benötigt der Stabilisierungskondensator nur eine entsprechend geringere Spannungsfestigkeit als der Ladekondensator. Darüber hinaus ist durch diese Schaltung dafür gesorgt, dass der Stabilisierungskondensator nur in seltenen Fällen, nämlich bei einem Netzausfall, genutzt wird Daher ist er keiner hohen Belastung ausgesetzt. Diese Vorraussetzungen erlauben den Einsatz eines relativ kleinen und kostengünstigen Stabilisierungskondensators.

Der Bruchteil der am Ladekondensator maximal anliegenden Spitzenspannung, auf den der Stabilisierungskondensator aufgeladen wird, wird durch die einzelnen Bauteile in der Schaltungsanordnung definiert. Die Entladung des Stabilisierungskondensators beginnt dann im wesentlichen, d.h. ungefähr, beim Abfall der am Ladekondensator anliegenden Spannung unter den am Stabilisierungskondensator anliegenden Spannungswert. Die Werte stimmen in der Regel nicht genau überein, da geringe Abweichungen durch Spannungsabfälle an sonstigen, für die Schaltungsanordnung benötigten Bauteilen, beispielsweise Abweichungen durch Schleusenspannungen von Dioden etc., berücksichtigt werden müssen. Anstelle eines Stabilisierungskondensators können auch mehrere, zB. zwei, Stabilisierungskondensatoren eingesetzt werden.

Bei einem besonders einfachen und kostengünstigen Ausführungsbeispiel werden zwei Stabilisierungskondensatoren verwendet, welche mittels Dioden so zueinander und zum Ladekondensator verschaltet sind, dass die Stabilisierungskondensatoren bei einem Aufladevorgang als parallel zum Ladekondensator und zueinander in Reihe geschaltete Stabilisierungskondensatoren wirken und bei einem Entladevorgang als parallel zum Ladekondensator und parallel zueinander geschaltete Stabilisierungskondensatoren wirken. Dies bedeutet, dass beim Aufladen die am Ladekondensator anliegende Spannung sich auf die beiden in Reihe liegenden Stabilisierungskondensatoren aufteilt und diese dementsprechend nur auf den jeweiligen Anteil der Spitzenspannung des Ladekondensators aufgeladen werden. Da im umgekehrten Fall, d.h. beim Entladen, die beiden Stabilisierungskondensatoren jeweils einzeln parallel zum Ladekondensator liegen, werden diese Stabilisierungskondensatoren erst dann entladen, wenn die Spannung am Ladekondensator unter den Spannungswert der Stabilisierungskondensatoren absinkt. Dies ist in der Regel erst im Falle eines Netzausfalls gegeben.

Vorzugsweise werden zwei Stabilisierungskondensatoren verwendet, die ungefähr die gleiche Kapazität aufweisen. Es müssen dann beide Stabilisierungskondensatoren nur ca. die halbe Spannungsfestigkeit des Ladekondensators aufweisen.

Als Gleichrichterschaltung kann in der erfindungsgemäßen Schaltungsanordnung ein beliebiger Gleichrichter, d.h. sowohl ein Einweg- als auch ein Zweiweg- Gleichrichter, wie eine Mittelpunkt- oder eine Brückenschaltung, verwendet werden. Vorzugsweise wird eine Dioden-Brückenschaltung verwendet, da diese ohne Trafo direkt an die Netzeingangsspannung angeschlossen werden kann und sich somit zum Aufbau von Schaltnetzteilen eignet.

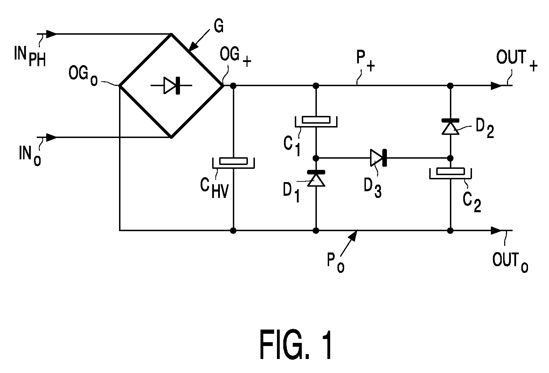

Die Erfindung wird im Folgenden unter Hinweis auf die beigefügte Figur anhand eines Ausführungsbeispiels näher erläutert. Die Figur zeigt ein Schaltbild eines Ausführungsbeispiels eines erfindungsgemäß aufgebauten Zwischenkreises, der an der einen Seite Anschlüsse IN_{PH}, IN₀ für ein 220 V-Netz und an der anderen Seite Anschlüsse OUT₊, OUT₀ zum Anschluss eines DC-DC-Konverters aufweist.

Wie in der Figur dargestellt, weist die erfindungsgemäße Schaltungsanordnung auf Seiten des Eingangs IN_{PH}, IN₀ zunächst einen Gleichrichter G, hier eine übliche Brückenschaltung, auf. In diesem Gleichrichter G wird die am Eingang IN_{PH}, IN₀ anliegende Wechselspannung in eine gleichgerichtete Spannung umgewandelt, welche zwischen dem Spitzenspannungswert der Eingangsspannung und dem Nullpotential periodisch schwankt. Parallel zu den Ausgängen OG₀, OG₊ des Gleichrichters G ist ein Ladekondensator C_{HV} geschaltet, der die am Ausgang OG₊ des Gleichrichters G anliegende Spannung glättet und dafür sorgt, dass der Spannungswert nicht auf Null absinkt.

Parallel zu dem Ladekondensator C_{HV} ist zwischen dem am Ausgang OG₀ des Gleichrichters G anliegenden niedrigeren Potential P₀, hier einem Nullpotential, und dem am anderen Ausgang OG₊ des Gleichrichters G anliegenden höheren Potential P₊ eine Kette von drei seriell hintereinander in Sperrrichtung geschalteten Dioden D₁, D₂, D₃ angeordnet. Zwischen dem positiven Potential P₊ und der vom Nullpotential P₀ aus gesehenen ersten Diode D₁ ist der erste Stabilisierungskondensator C₁ geschaltet. Zwischen dem Nullpotential P₀ und der vom Nullpotential P₀ aus gesehenen dritten Diode D₃ ist der zweite Stabilisierungskondensator C₂ geschaltet.

Durch die spezielle Schaltung mittels der Dioden D₁, D₂, D₃ wird erreicht, dassbei einem Aufladen der Stabilisierungskondensatoren C₁, C₂, d.h. bei einem Stromfluss vom positiven Potential P₊ über den ersten Stabilisierungskondensator C₁, über die mittlere Diode D₃ und über den zweiten Stabilisierungskondensator C₂ zum Nullpotential P₀, die beiden Stabilisierungskondensatoren C₁, C₂ in Reihe geschaltet sind. Bei einer Auswahl von zwei Stabilisierungskondensatoren C₁, C₂ mit gleicher Kapazität werden die beiden Stabilisierungskondensatoren folglich nur auf den halben Wert der am Ladekondensator C_{HV} anliegenden Spitzenspannung aufgeladen. Sie benötigen daher auch nur die halbe Spannungsfestigkeit. Durch die zwischen den Stabilisierungskondensatoren C₁, C₂ angeordnete Diode D₃ ist dafür gesorgt, dass über diesen Weg die Stabilisierungskondensatoren C₁, C₂ nicht wieder entladen werden können.

Eine Entladung der beiden Stabilisierungskondensatoren C₁ und C₂ ist jeweils nur über die Dioden D₁ bzw. D₂ möglich, d.h. bei einer Entladung wirken die beiden Stabilisierungskondensatoren C₁, C₂ wie zwei parallel angeordnete Kondensatoren. Eine Entladung der Stabilisierungskondensatoren C₁, C₂ findet folglich nur dann statt, wenn die Spannung am Ladekondensator C_{HV}, d.h. der Spannungswert des höheren Potentials P₊, unter die an den aufgeladenen Stabilisierungskondensatoren C₁, C₂ anliegende Spannung (abzüglich der Schleusenspannung der Dioden D₁, D₂) abfällt. Solange die Spannung am Ladekondensator C_{HV} nicht unter diesen Wert sinkt, bleiben die Stabilisierungskondensatoren C₁, C₂ sowie die Dioden D₁, D₂, D₃ inaktiv. Erst im Falle eines Netzausfalls sinkt die Spannung am Ladekondensator C_{HV} in der Regel unter diesen Wert. Ab diesem Zeitpunkt sinkt dann die Zwischenkreisspannung erheblich langsamer ab, da dann die Energie aus den beiden Stabilisierungskondensatoren C₁ und C₂ geliefert wird

Der Ladekondensator C_{HV} braucht daher nur noch für den Normalbetrieb ausgelegt zu werden. D.h. es wird ein Ladekondensator C_{HV} gewählt, welcher den normalen Vorschriften bezüglich der Lebensdauer, des RMS-Werts, des gewünschten Stroms und des Spannungsripples (Brummspannung) sowie der benötigten Spannungsfestigkeit entspricht. Im Falle einer Anwendung im europäischen 220 V-Netz ist hierfür beispielsweise ein 400 V Elektrolytkondensator geeignet.

Die beiden Stabilisierungskondensatoren C₁, C₂ benötigen dagegen nur die halbe Spannungsfestigkeit. Die übrigen Werte der Kondensatoren können entsprechend den Erfordernissen des nachfolgenden DC-DC-Wandlers, der Eingangsnetzspannung sowie der sonstigen Spezifikationen optimiert werden. Da sowohl die Stabilisierungskondensatoren C₁, C₂ als auch die Dioden D₁, D₂, D₃ nur selten benutzt werden, ist die Belastung dieser Komponenten äußerst gering so dass hier extrem preiswerte Komponenten verwendet werden können. So können beliebige, einfache Dioden, beispielsweise normale 50 Hz- Siliziumdioden mit einer Schleusenspannung von 0,7 V, verwendet werden.

Bei einem vorliegenden Ausführungsbeispiel wird als Ladekondensator ein Kondensator mit 68 µF und als Stabilisierungskondensatoren werden jeweils Kondensatoren mit 100 µF verwendet. Selbstverständlich können auch Kondensatoren mit beliebigen anderen zueinander passenden Werten eingesetzt werden.

Darüber hinaus ist auch klar, dass die beschriebenen bzw. auch in der Figur dargestellten Kondensatoren und Dioden nur funktionelle Kapazitäten und Dioden darstellen. Das heißt, jeder der Kondensatoren kann beispiauch durch mehrere parallele Kondensatoren ersetzt werden. Ebenso ist es auch möglich, an Stelle einer einzelnen Diode mehrere parallel und/oder in Ketten hintereinander angeordnete Dioden zu verwenden, um zum Beispiel durch die redundante Anordnung von Dioden eine größere Sicherheit zu erreichen.

Durch die erfindungsgemäße Schaltungsanordnung kann der in den bisher üblichen Schaltungsanordnungen relativ große und außerordentlich teure Ladekondensator erheblich verkleinert und für den normalen Betrieb ohne Berücksichtigung von Netzausfällen optimiert werden. Da die zusätzlichen Kondensatoren sowie Dioden nur bei einem Netzausfall verwendet werden, können hier extrem billige Komponenten eingesetzt werden. Dadurch wird auf einfache Weise eine ausreichend große und trotzdem preisgünstige Kapazität für den Netzausfall geschaffen.

## Patentansprüche

1. Schaltungsanordnung zur Umwandlung einer Eingangs-Wechselspannung in eine gleichgerichtete Ausgangsspannung mit einer Gleichrichterschaltung (G) und einem nachgeschalteten Ladekondensator (C_{HV}),
**gekennzeichnet durch** einen Stabilisierungskondensator (C₁, C₂), welcher derart parallel zum Ladekondensator (C_{HV}) geschaltet ist, dass der Stabilisierungskondensator (C₁, C₂) bei einem Aufladen des Ladekondensators (C_{HV}) maximal soweit aufgeladen wird, bis der am Stabilisierungskondensator (C₁, C₂) anliegende Spannungswert einem Bruchteil einer am Ladekondensator (C_{HV}) maximal anliegenden Spitzenspannung entspricht, und bei einem Entladen des Ladekondensators (C_{HV}) im wesentlichen erst bei einem Abfall der am Ladekondensator (C_{HV}) anliegenden Spannung unter den am Stabilisierungskondensator (C₁, C₂) anliegenden Spannungswert wieder entladen wird.

2. Schaltungsanordnung nach Anspruch 1,
**gekennzeichnet durch** zwei Stabilisierungskondensatoren (C₁, C₂), welche mittels Dioden (D₁, D₂, D₃) so zueinander und zum Ladekondensator (C_{HV}) verschaltet sind, dass die Stabilisierungskondensatoren (C₁, C₂) bei einem Aufladevorgang als parallel zum Ladekondensator (C_{HV}) zueinander in Reihe geschaltete Stabilisierungskondensatoren (C₁, C₂) wirken und bei einem Entladevorgang als parallel zum Ladekondensator (C_{HV}) und parallel zueinander geschaltete Stabilisierungskondensatoren wirken (C₁, C₂).

3. Schaltungsanordnung nach Anspruch 2,
**gekennzeichnet durch** drei parallel zum Ladekondensator (C_{HV}) zwischen einem niedrigeren Potential (P₀) und einem höheren Potential (P₊) seriell hintereinander in Sperrrichtung geschaltete Dioden (D₁, D₂, D₃),
einen zwischen dem höheren Potential (P₊) und der vom niedrigeren Potential (P₀) aus gesehenen ersten der drei Dioden (D₁) geschalteten ersten Stabilisierungskondensator (C₁) und
einen zwischen dem niedrigeren Potential (P₀) und der vom niedrigeren Potential (P₀) aus gesehenen dritten der drei Dioden (D₃) geschalteten zweiten Stabilisierungskondensator (C₂).

4. Schaltungsanordnung nach Anspruch 2 oder 3,
**dadurch gekennzeichnet,**
**dass** die Stabilisierungskondensatoren (C₁, C₂) Kapazitäten mit einem definierten Verhältnis zueinander aufweisen.

5. Schaltungsanordnung nach Anspruch 2 oder 3,
**dadurch gekennzeichnet,**
**dass** die Stabilisierungskondensatoren (C₁, C₂) im Wesentlichen die gleiche Kapazität aufweisen.

6. Schaltungsanordnung nach einem der Ansprüche 1 bis 5,
**dadurch gekennzeichnet,**
**dass** die Gleichrichterschaltung (G) eine Brückenschaltung umfasst.
